# EUROPEAN PATENT APPLICATION

(11) **EP 4 510 652 A1**
(43) Date of publication of application: **19.02.2025**
(21) Application number: 23787478.9
(22) Date of filing: 20.03.2023
(51) Int. Cl.: H04W 4/80

(54) **HEAD-MOUNTED TERMINAL DEVICE, AND TRACKING METHOD AND APPARATUS THEREFOR**

(30) Priority: 13.04.2022 CN 202210387200
(71) Applicant: Beijing Zitiao Network Technology Co., Ltd., Beijing 100190 (CN)
(72) Inventor: ZHANG, Xiuzhi, Beijing 100028 (CN)
(74) Representative: Dentons UK and Middle East LLP
(86) International application number: PCT/CN2023/082445
(87) International publication number: WO 2023/197831

(57) **Abstract**

This application discloses a head-mounted all-in-one machine system and a tracking method and device thereof. The head-mounted terminal device includes a head-mounted all-in-one machine and at least one external tracking device wearable on the body of the user. The head-mounted all-in-one machine and external tracking device can communicate through at least two wireless communication manners. According to the inertial navigation data of the inertial measurement unit of the external tracking device, determine the posture data of at least one external tracking device in the three-dimensional space, and conduct user body part tracking according to the posture data. The scheme of this application determines that the head-mounted terminal device conducts corresponding time synchronization through the wireless communication manner between the head-mounted all-in-one machine and the external tracking device, reduces the time delay, and improves the tracking accuracy of the head-mounted terminal device to the body parts of the user.

## Description

### CROSS REFERENCE

This application claims priority of the Chinese invention patent application No. CN202210387200.1 submitted on April 13, 2022, and entitled "A HEAD-MOUNTED TERMINAL DEVICE AND TRACKING METHOD AND APPARATUS THEREOF ".

### FIELD

This application relates to the field of a head-mounted all-in-one machine, and in particular to a head-mounted terminal device and tracking method and apparatus thereof.

### BACKGROUND

With the development of VR (Virtual Reality) technology, the VR helmet experience and game content are becoming increasingly rich, especially with performance improvement of 6DoF (Degree of Freedom) VR all-in-one machine, contents and experiences of 6DoF game are rapidly improving. Existing VR 6DoF games and applications mainly rely on the 6DoF function of a head-mounted all-in-one machine and handle to realize basic interaction actions of the games and applications, however, body actions such as walking, running, sitting, squatting, dancing, kicking, yoga, etc. cannot be realized yet, which affects an experience of a user

A relevant solution is to arrange a laser tower in an external environment through outside-in (outside-in tracking technology) solutions such as a tracker, and laser points are arranged in the tracker , and through a cooperation of the laser tower and the laser points on the tracker, position information of a body part is located, then, the position information is transmitted to a PC (Personal Computer) or all-in-one machine through USB or wirelessly to track the body actions of the user.

This implementation method is complex to install, and needs to build an external laser tower, and is complex to use, and especially for the head-mounted all-in-one machine, needs to calibrate the position relationship between the head-mounted all-in-one machine and the laser tower.

### SUMMARY

In view of this, a main purpose of this application is to provide a head-mounted terminal device and tracking method and apparatus thereof for solving or partially solving above problems.

According to a first aspect of this application, a tracking method of a head-mounted terminal device is provided, wherein the head-mounted terminal device includes a head-mounted all-in-one machine and at least one external tracking device being wearable on a user body part, the head-mounted all-in-one machine and the external tracking device can communicate through at least two wireless communication manners, and the external tracking device comprises an inertial measurement unit; the method includes:
based on a wireless communication manner between the head-mounted all-in-one machine and the at least one external tracking device, controlling the head-mounted terminal device to perform time synchronization;
based on inertial navigation data of the inertial measurement unit, determining posture data of the at least one external tracking device in a three-dimensional space, and performing user body part tracking based on the posture data.

According to a second aspect of this application, a tracking apparatus of a head-mounted terminal device is provided, wherein the head-mounted terminal device includes a head-mounted all-in-one machine and at least one external tracking device being wearable on a user body part, the head-mounted all-in-one machine and the external tracking device can communicate through at least two wireless communication manners, and the external tracking device includes an inertial measurement unit; the tracking apparatus includes:
a time synchronization unit configured to, based on the wireless communication manner between the head-mounted all-in-one machine and at least one external tracking device, control the head-mounted terminal device to perform time synchronization;
a user tracking unit configured to, based on inertial navigation data of the inertial measurement unit, determine posture data of the at least one external tracking device in a three-dimensional space, and perform user body part tracking based on the posture data.

According to a third aspect of this application, a head-mounted terminal device is provided,
a head-mounted all-in-one machine and at least one external tracking device being wearable on a user body part, the head-mounted all-in-one machine and the external tracking device can communicate through at least two wireless communication manners, and the external tracking device includes an inertial measurement unit;
wherein the head-mounted all-in-one machine includes: a processor and a memory for storing computer executable instructions, the computer executable instructions, when executed by the processor, perform the tracking method of the head-mounted terminal device.

According to a fourth aspect of the present application, a computer-readable storage medium is provided, wherein the computer-readable storage medium stores one or more programs, the one or more programs, when executed by a processor, perform the tracking method of the head-mounted terminal device.

At least one of above-mentioned technical solutions adopted in this application can realize following beneficial effects:
1)The head-mounted all-in-one machine in the embodiments of this application is paired with a plurality of external tracking devices by means of wireless communication connection, without need of building an external laser tower and complicated installation process.
2)The external tracking device in the embodiments of this application is wearable on various parts of the user body, and only the external tracking device needs to be worn on the body parts that need to be tracked, such as hands, knee joints, elbow joints, lower legs and other body parts of the user, in cooperation with the head-mounted all-in-one machine, head, hand and body actions of the user can be tracked in a real time, so that the head-mounted all-in-one machine system can track a plurality of body parts of the user.
3)There are at least two wireless communication manners between the head-mounted all-in-one machine and the plurality of external tracking devices in the embodiments of this application, when the head-mounted terminal device is used for user tracking, based on a wireless communication manner between the head-mounted all-in-one machine and the external tracking device, controlling the head-mounted terminal device to perform corresponding time synchronization, to reduce data transmission delay between devices, and to improve user tracking accuracy of the head-mounted all-in-one machine system.

### BRIEF DESCRIPTION OF THE DRAWINGS

By reading detailed description of preferred implementations in following text, various other advantages and benefits will become clear to those skilled in the art. Drawings are only for purpose of illustrating preferred embodiments and are not considered a limitation on this application. And throughout entire the drawings, same reference symbols are used to represent same components. In the drawings:
FIG. 1 illustrates a schematic flow diagram of a user tracking method of a head-mounted terminal device according to an embodiment of this application;
FIG. 2 illustrates a schematic diagram of establishing a wireless connection based on a first wireless communication manner according to an embodiment of this application;
FIG. 3 illustrates a schematic diagram of establishing a wireless connection based on a second wireless communication manner according to an embodiment of this application;
FIG. 4 illustrates a schematic diagram of establishing a wireless connection based on a first wireless communication manner and a second wireless communication manner according to an embodiment of this application;
FIG. 5 illustrates a schematic appearance diagram of a head-mounted all-in-one machine according to an embodiment of this application;
FIG. 6 illustrates a block diagram of a user tracking apparatus of a head-mounted terminal device according to an embodiment of this application;
FIG.7 illustrates a schematic structure diagram of a head mounted terminal device in an embodiment of this application;
FIG. 8 illustrates the structural diagram of the body tracker in an embodiment of this application.

### DETAILED DESCRIPTION

Hereinafter, example embodiments of this application will be described in more detail with reference to the drawings. These embodiments are provided in order to have a more thorough understanding of this application and to be able to completely convey a scope of this application to those skilled in the art. Although the drawings show example embodiments of this application, it should be understood that this application may be implemented in various forms and should not be limited by the embodiments described here.

In order to solve a body tracking problem of a head-mounted terminal device, the embodiments of this application design an external tracking device that cooperates with the head-mounted all-in-one machine, use an inertial measurement unit (IMU) of the external tracking device to track user body actions, based on a wireless communication manner of the head-mounted all-in-one machine and the external tracking device, control the head-mounted all-in-one machine and the external tracking device to perform time synchronization in a corresponding manner, so as to reduce data delay and improve tracking accuracy of the body actions of the user.

The embodiments of this application provide a tracking method of a head-mounted terminal device.

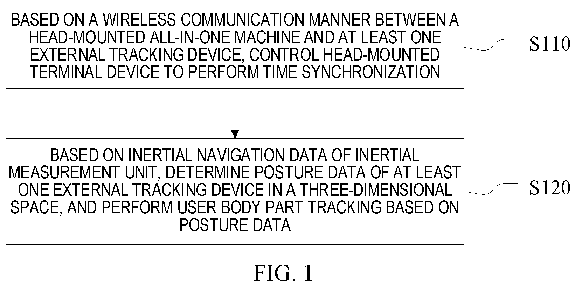

FIG. 1 illustrates a flow diagram of a tracking method of the head-mounted terminal device according to an embodiment of this application. The head-mounted terminal device of the embodiments of this application includes a head-mounted all-in-one machine and at least one external tracking device being wearable on a user body part, the head-mounted all-in-one machine and the at least one external tracking device can communicate through at least two wireless communication manners, wherein a first wireless communication manner is realized based on a customized channel, and the customized channel does not support data retransmission during data transmission, and a second wireless communication manner is realized based on a classic channel.

The external tracking device of this embodiment includes an inertial measurement unit. It can be understood that the external tracking device of this embodiment includes, but is not limited to, a handle controller and a body tracker.

As shown in FIG. 1, the tracking method of the head-mounted terminal device in the embodiments of this application at least includes following steps S110 to S120:
Step S110, based on a wireless communication connection manner between the head-mounted all-in-one machine and the external tracking device, controlling the head-mounted terminal device for time synchronization.

The head-mounted terminal device of the embodiment includes a wireless communication apparatus, and the head-mounted terminal device can communicate in at least two wireless communication manners through the wireless communication apparatus. For example, when the head-mounted all-in-one machine communicates with the external tracking device in the first wireless communication manner, the head-mounted all-in-one machine can be in time synchronization with the external tracking device. For another example, when the head-mounted all-in-one machine communicates with the external tracking device in the second wireless communication manner, the head-mounted all-in-one machine is not in time synchronization with the external tracking device, but time synchronization exists between individual external tracking devices.

Different from prior art, at least two wireless communication manners in the embodiments of this application refer to at least two different types of channels for data transmission, such as a customized channel and a classic channel. The classic channel refers to a channel built based on a wireless communication protocol stack, and the customized channel refers to a channel that is customized according to needs and does not support data retransmission.

It should be noted that various short-range wireless communication manners currently built based on standard wireless communication protocols, such as channels built based on WireLess HD technology, WiGig technology, etc., belong to the classic channel of the embodiments.

Taking the Bluetooth protocol stack as an example, it mainly includes a physical layer, a logical layer, a L2CAP (Logical Link Control and Adaptation Protocol) layer, and an application layer, wherein main function of the logical layer is to establish a logical channel based on a physical link between connected Bluetooth devices. In the embodiments, the at least two wireless communication manners may be understood as at least two different types of logical channels.

Since the physical layer is unreliable, any data transmission may be damaged or lost due to interference and other problems, the physical layer further provides verification, retransmission and other mechanisms to ensure reliability of data transmission. However, verification and retransmission mechanisms lead to inability of interconnected Bluetooth devices to obtain accurate time information of each other, thereby leading to inability of the head-mounted all-in-one machine and the external tracking device connected based on Bluetooth to realize high-precision time synchronization currently.

Based on this, the embodiments of this application sets a wireless communication manner that supports customized channel, and uses the customized channel to realize time synchronization between the head-mounted all-in-one machine and the external tracking device.

Step S120, based on inertial navigation data of the inertial measurement unit, determining posture data of the at least one external tracking device in a three-dimensional space, and performing user body part tracking based on the posture data.

The external tracking device in the embodiments includes a handheld device, a wearable device, and the like. In practical applications, a type of the external tracking device may be set based on application requirements, for example, in a scene that the hand of the user needs to be tracked, the external tracking device includes a handle controller, and in a scene that the body actions of the user need to be tracked, the external tracking device includes a body tracker.

The external tracking device in the embodiments includes an inertial measurement unit, the head-mounted all-in-one machine may calculate the posture data of the external tracking device in the three-dimensional space, that is, 3DOF tracking data, based on the inertial navigation data of the inertial measurement unit. The head-mounted all-in-one machine further includes a camera module, the camera module is used to collect image data of the external tracking device. Based on the image data of the external tracking device and the posture data of external tracking device in three-dimensional space, pose data of the external tracking device can be calculated. Based on the pose data, 6DOF tracking of the external tracking device can be realized, here, the pose data include posture data and position data.

It can be seen that in the method shown in FIG. 1, in a head-mounted terminal device composed of the head-mounted all-in-one machine and the at least one external tracking device, the head-mounted all-in-one machine can communicate with the at least one external tracking device through at least two wireless communication manners. In a scene that the head-mounted terminal device performs user tracking, based on a wireless communication manner between the head-mounted terminal device and the external tracking device, controlling the head-mounted terminal device to perform time synchronization in a corresponding manner, and tracking accuracy of head-mounted terminal device to the user body part can be improved through reducing data transmission delay between devices.

In some embodiments, the head-mounted all-in-one machine and the external tracking device can communicate through two wireless communication manner, a first wireless communication manner is realized based on a customized channel, the customized channel does not support data retransmission in process of data transmission, and a second wireless communication manner is based on a classic channel.

When the head-mounted all-in-one machine communicates with the at least one external tracking device through the first wireless communication manner, controlling the head-mounted all-in-one machine to realize time synchronization with the at least one external tracking device, that is, in the first wireless communication manner, the head-mounted all-in-one machine and external tracking device can realize time synchronization. When the head-mounted all-in-one machine communicates with a plurality of external tracking devices through the second wireless communication manner, controlling the plurality of external tracking devices to realize time synchronization between them; that is, in the second wireless communication manner, the head-mounted all-in-one machine is not in time synchronization with the external tracking device, but time synchronization is realized between individual external tracking devices.

It is found through research that in the head-mounted terminal device, time delay of data is mainly embodied in two aspects. A first aspect is a first delay between processor reading time of the head-mounted all-in-one machine and transmission time of the wireless communication apparatus of the head-mounted all-in-one machine. A second aspect is a second delay from transmission time of the wireless communication apparatus of the head-mounted all-in-one machine to reception time of the wireless communication apparatus of the external tracking device.

For example, currently, a wireless chip of the head-mounted terminal device includes Wifi and Bluetooth, while most peripheral devices are connected through BLE (Bluetooth Low Energy) protocol. A transmission process of data reception is as follows: wireless reception ->BLE protocol stack ->serial port - >processor. A transmission process of data sending: processor ->serial port ->BLE protocol stack ->wireless sending.

At present, in Bluetooth communication manner based on a classic channel, time from a time system of a processor reads time to time when data is sent to the wireless communication apparatus by the processor in wired manner is uncertain, and the BLE protocol will have a retransmission mechanism, so data transmission delay cannot be determined. Therefore, a wireless communication manner based on a classic channel cannot realize the time system synchronization between the head-mounted all-in-one machine and the external tracking device.

For above delay problem, in some embodiments, when the head-mounted all-in-one machine communicates with the at least one external tracking device through the first wireless communication manner, controlling the head-mounted all-in-one machine to realize time synchronization with at the least one external tracking device, includes:
generating a hardware interrupt event and obtaining time delay information of the head-mounted all-in-one machine corresponding to the hardware interrupt event; sending the time delay information through a customized channel, so that the at least one external tracking device is in time synchronization with the head-mounted all-in-one machine based on the time delay information and propagation time information, and the propagation time information includes propagation time of an electromagnetic wave between the head-mounted all-in-one machine and the external tracking device obtained in advance. Since a transmission speed of the electromagnetic wave is far greater than a distance between the devices, transmission time of the electromagnetic wave between the head-mounted all-in-one machine and the external tracking device is a fixed value, which can be obtained in advance.

The time delay information may be obtained through following steps: in response to the hardware interrupt event, obtaining a processor time and a wireless communication apparatus time corresponding to the hardware interrupt event; obtaining the time delay information of the wireless communication apparatus time relative to the processor time based on the processor time and the wireless communication apparatus time.

That is to say, the head-mounted all-in-one machine in the embodiment includes a processor and a wireless communication apparatus, wherein the processor includes a master clock, and the wireless communication apparatus includes a sub clock, the time delay information refers to a time delay between the sub clock and the master clock. The embodiment can significantly reduce the first delay described above through the sub clock and the time delay. The second delay described above can be significantly reduced through the sub clock of the wireless communication apparatus of the head-mounted all-in-one machine, the sub clock of the wireless communication apparatus of the external tracking device and the propagation time information.

In some embodiments, the time delay information of the head-mounted all-in-one machine corresponding to the hardware interrupt event may be obtained through following steps:
in response to the hardware interrupt event, obtaining a processor time and wireless communication apparatus time corresponding to the hardware interrupt event; obtaining the time delay information of the wireless communication apparatus time relative to the processor time based on the processor time and the wireless communication apparatus time.

In this way, before sending the time delay information through the customized channel, obtaining current time of the wireless communication apparatus, and generating timestamp information of the head-mounted all-in-one machine based on the current time and the time delay information of the wireless communication apparatus, sending the time delay information through the customized channel. The external tracking device can obtain a time delay between the external tracking device and the head-mounted all-in-one machine based on the timestamp information and propagation time information, and realize time synchronization with the head-mounted all-in-one machine based on the time delay.

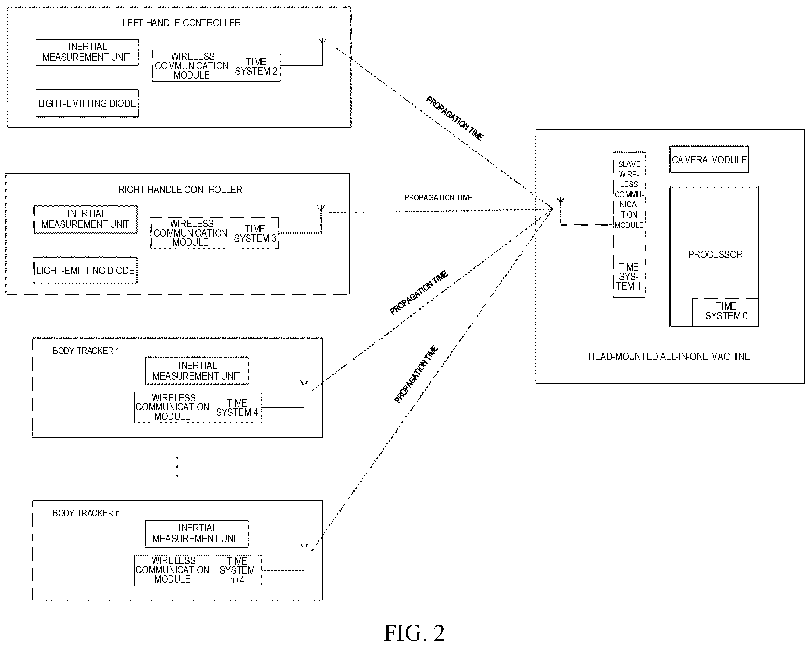

Referring to FIG. 2, the head-mounted terminal device includes the head-mounted all-in-one machine and the external tracking device, wherein the external tracking device includes a left handle controller, a right handle controller and n body trackers.

The head-mounted all-in-one machine includes a slave wireless communication module, which communicates in the first wireless communication manner, and the slave wireless communication module includes a sub clock, that is, a time system 1, and the processor includes a master clock, that is, a time system 0. The external tracking device includes wireless communication modules matched with the slave wireless communication module, and each wireless communication module includes a time system respectively.

As shown in FIG. 2, the head-mounted all-in-one machine wirelessly establishes communication with the left handle controller, the right handle controller and the n body trackers through the first wireless communication manner.

Time synchronization mechanism of the embodiment corresponding to the first wireless communication manner is an in-depth development based on wireless system, time of the time system 1 is read from the wireless communication module of the head-mounted all-in-one machine at the time of data transmission, and the time of the time system of the wireless communication module of the external tracking device at time of data reception; a wireless data transmission speed is a speed of light, and a data packet does not use retransmission technology, so a receiving interruption time of the wireless communication module from transmission interruption of the head-mounted all-in-one machine to the external tracking device is fixed, and time system synchronization of the wireless communication module of the external tracking device and the slave wireless communication module of the head-mounted all-in-one machine is realized through the propagation time information.

Similarly, time system synchronization between the processor of the head-mounted all-in-one machine and the slave wireless communication module also uses a similar mechanism, which uses wired transmission and the hardware event interrupt to obtain a time delay between the time system 0 and the time system 1.

After obtaining the time system delay between the processor of the head-mounted all-in-one machine and the slave wireless communication module, and the time system delay between the slave wireless communication module and the wireless communication modules of each external tracking device, the time system delay between the processor of the head-mounted all-in-one machine and the wireless communication modules of each external tracking device can be obtained, thereby realizing time system synchronization between the head-mounted all-in-one machine and each external tracking device, the time synchronization accuracy of the embodiment can reach several us.

It should be noted that, in a body part tracking scene, the head-mounted all-in-one machine and each external tracking device can also include other functional components, for example, the head-mounted all-in-one machine further includes a camera module, and the left handle controller and the right handle controller also include an inertial measurement unit and a light-emitting diode. Those skilled in the art may flexibly set relevant functional modules of the head-mounted terminal device.

In some embodiments, when the head-mounted all-in-one machine communicates with the plurality of external tracking devices through the second wireless communication manner, controlling the plurality of external tracking devices to realize time synchronization, includes:
sending a master-slave setup command to the plurality of external tracking devices through the classic channel, so that the external tracking device determines a master device and a slave device based on the master-slave setup command, wherein the master device broadcasts a synchronization signal to each slave device, and the slave device receives the synchronization signal broadcasted by the master device, and the master device and the slave device realize time synchronization through the synchronization signal.

The synchronization signal carries a timestamp information and a propagation time information of the master device, and each slave device can determine a time delay between the slave device and the master device based on the timestamp information and the propagation time information of the master device, thereby realizing time synchronization between the master device and the slave device.

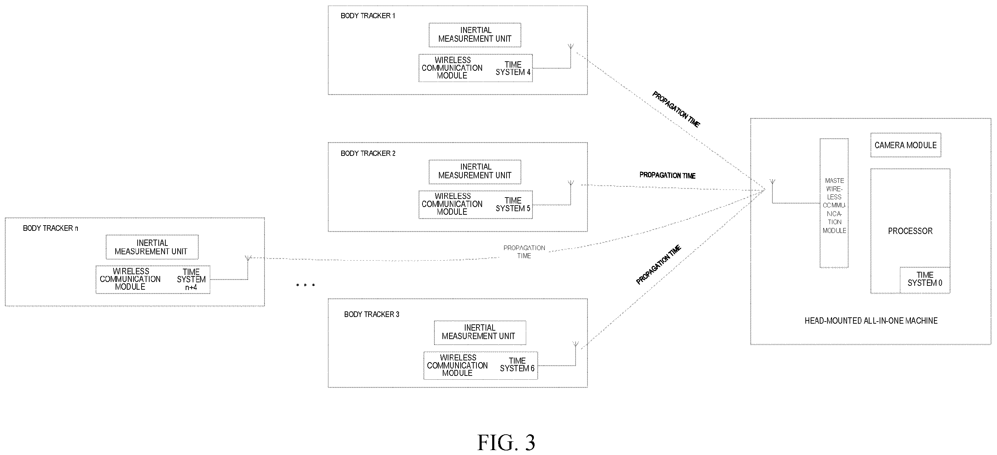

Referring to FIG. 3, the head-mounted terminal device includes a head-mounted all-in-one machine and an external tracking device, wherein the external tracking device includes n body trackers.

The head-mounted all-in-one machine includes a master wireless communication module, which communicates in the second wireless communication manner, wherein the head-mounted all-in-one machine further includes a processor, which includes a master clock, that is, a time system 0. The external tracking device includes wireless communication modules matched the master wireless communication module, and each wireless communication module includes its own time system.

As shown in FIG. 3, the head-mounted all-in-one machine establishes wireless communication with the n body trackers through the second wireless communication manner.

Time synchronization mechanism of the embodiment corresponding to the second wireless communication manner is a wireless system at this stage, the head-mounted all-in-one machine sends a master-slave setup command to the n body trackers through the classic channel of the master wireless communication module, the n body trackers select a master device and a slave device based on the master-slave setup command, wherein the master device broadcasts a synchronization signal to each slave device, and the synchronization signal carries a timestamp information and a propagation time information of the master device, the slave device selects the timestamp information, the propagation time information and a local time of the master device based on the master-slave setup command, to realize time synchronization with the master equipment.

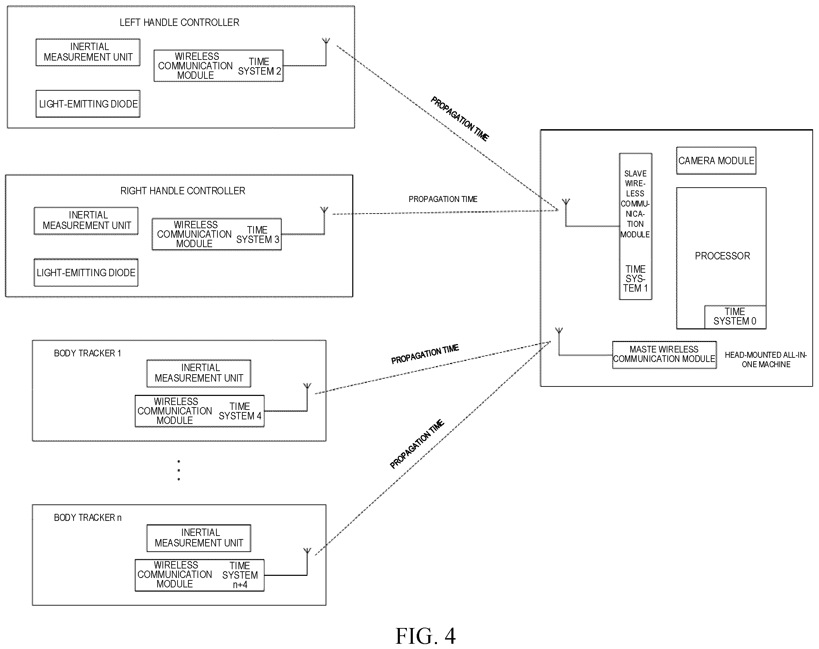

In practical applications, the head-mounted terminal device further includes a wireless communication scene shown in FIG. 4, the head-mounted all-in-one machine communicates with a part of the external tracking device through the first wireless communication manner, and also communicates with another part of the external tracking device through the second wireless communication manner. In the embodiment, it is exemplarily illustrated that each external tracking device can only communicate with the head-mounted all-in-one machine through one wireless communication manner at a time. In practical applications, those skilled in the art may reasonably set, for example, each external tracking device can communicate with the head-mounted all-in-one machine through two wireless communication manner at the same time.

In a scene shown in FIG. 4, the head-mounted all-in-one machine includes a master wireless communication module and a slave wireless communication module, wherein the master wireless communication module communicates in the second wireless communication manner, and the slave wireless communication module communicates in the first wireless communication manner. The external tracking device includes a left handle controller, a right handle controller and n body trackers.

As shown in FIG. 4, when time synchronization is required, the head-mounted all-in-one machine sends the timestamp information of the head-mounted all-in-one machine to the left and right handle controllers through the slave wireless communication module, wherein the timestamp information includes a current time and a time delay information of the slave wireless communication module, and the left and right handle controllers determine time delays of time systems 2 and 3 relative to a time system 0 based on a current time of a time system 1, a time delay information, a propagation time information and local time of the time systems 2 and 3, and realize time synchronization between the left and right handle controllers and the head-mounted all-in-one machine based on the time delay.

After the left and right handle controllers realize time synchronization, an inertial navigation data of the left and right handle controllers have unified timestamp information, light-emitting diodes of the handle controllers can also be accurately controlled to correspond to an exposure time point of a camera module through the time system 0, so as to calculate a pose data of the handle controller in a three-dimensional space based on the inertial navigation data of the handle controller and an image data of the handle controller, and to perform 6DOF tracking of the head and hand parts of the user.

As shown in FIG. 4, when time synchronization is required, the head-mounted all-in-one machine also sends a master-slave setup command to n body trackers through the master wireless communication module, and the n body trackers determine a master device and a slave device based on the master-slave setup command. The master device and the slave device can exchange their respective address information through the wireless communication module, wherein the master device broadcasts a synchronization signal based on the address information of the slave device, the synchronization signal carries a timestamp information and a propagation time information of the master device, and the slave device performs time synchronization with the master device based on a timestamp information, a propagation time information of the master device and a local time of the slave device.

In some embodiments, before controlling the head-mounted terminal device to perform time synchronization based on the wireless communication manner between the head-mounted all-in-one machine and at least one external tracking device, further includes:
controlling the head-mounted all-in-one machine to establish wireless connection with the at least one external tracking device through a corresponding wireless communication manner based on a wireless communication manner supported by an external tracking device.

For example, when the external tracking device supports the first wireless communication manner, controlling the head-mounted all-in-one machine to establish a wireless connection with the external tracking device through the first wireless communication manner. When the external tracking device supports the second wireless communication manner, controlling the head-mounted all-in-one machine to establish a wireless connection with the external tracking device through the second wireless communication manner.

For another example, when the external tracking device supports both the first wireless communication manner and the second wireless communication manner, the head-mounted all-in-one machine can be controlled to establish a wireless connection with the external tracking device based on wireless communication manner selecting instructions, priority of the external tracking device, a number of external tracking devices accessible from the wireless communication module, etc.

For example, in one scene, the external tracking device is provided with a wireless communication module matching the master and slave wireless communication modules of the head-mounted all-in-one machine, and the number of external tracking device that can be accessed from the slave wireless communication module of the head-mounted all-in-one machine does not exceed two. If the head-mounted all-in-one machine is connected to less than two external tracking devices wirelessly, at this time, all external tracking device may use the first wireless communication manner to connect to the head-mounted all-in-one machine wirelessly. When the head-mounted all-in-one machine is connected to more than two external tracking devices wirelessly, the external tracking device may be controlled to connect to the head-mounted all-in-one machine wirelessly based on type, function, priority, etc. of the external tracking device. For example, when all external tracking device are devices with the same function, and all external tracking device may be controlled to use the second wireless communication manner to connect to the head-mounted all-in-one machine wirelessly.

In some embodiments, when the head-mounted terminal device being initiated, the head-mounted terminal device can be controlled to perform time synchronization based on the wireless communication manner between the head-mounted all-in-one machine and the at least one external tracking device.

Of course, during data interaction of the head-mounted terminal device, the head-mounted all-in-one machine controls the head-mounted terminal device to perform time synchronization in accordance with a set frequency. Through a plurality of time synchronization processing, each sensor is ensured to have the same time stamp, and user tracking accuracy is improved.

The above embodiments improve the user tracking accuracy of the head-mounted all-in-one machine system through the time synchronization scheme, in some embodiments, the user tracking accuracy of the head-mounted all-in-one machine system may also be improved by improving a field of view angle range of a camera module in the head-mounted all-in-one machine.

The head-mounted all-in-one machine includes a camera module, which includes a plurality of cameras. The plurality of cameras are scattered on a surface of the head-mounted all-in-one machine to increase a tracking range of the head-mounted all-in-one machine, when the head-mounted all-in-one machine tracks an external tracking device such as a handle controller in real time, it can improve the tracking range of an optical handle controller, and reduce a tracking blind area of the optical handle controller, and obtain a better tracking experience of the handle controller.

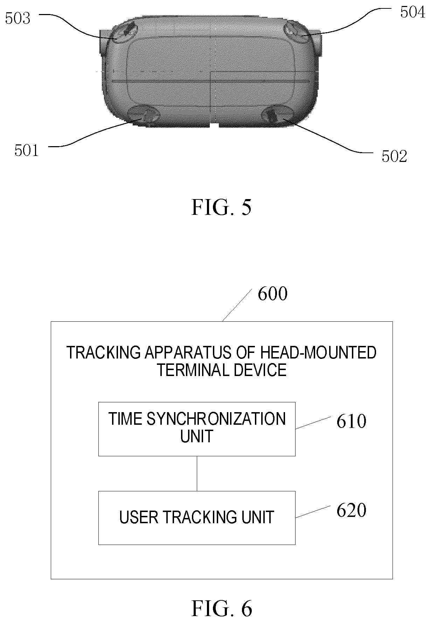

For example, as shown in FIG. 5, the camera module includes four cameras, within a main visible range of human eyes, a plurality of cameras being maintained overlapping to improve tracking accuracy and stability, an overlapping area of the four cameras can ensure better tracking accuracy and stability. Specifically, a focus can be on increasing the overlapping area of the cameras in a lower left camera 501 and a lower right camera 502 to improve stability and accuracy of a visible area.

Continuing with reference to FIG. 5, any camera in the embodiment may have the same horizontal field angle, vertical field angle and diagonal field angle, for any camera, it has a certain concave shape to avoid camera wear.

The plurality of cameras in the embodiment of this application keep working synchronously, due to different installation positions of each camera, corresponding external environment of each camera will be different, and exposure parameters will be different, for example, cameras in a darker environment has a longer exposure setting, and cameras in a better environment has a shorter exposure setting, in this case, alignment of exposure center point can be realized, so that data acquisition time of the plurality of cameras can be consistent, and the plurality of cameras can capture a surrounding environment at the same time to ensure the tracking accuracy.

For optical external tracking devices, such as in handle controllers embedded with light-emitting diodes, light sources of the handle controllers are much brighter compared to an external environment, in order to reduce impact of the external environment on handle tracking, exposure time of the plurality of cameras should be set very small, and the plurality of cameras should use the same exposure time, at the same time, it is ensured that the light sources of the handle controllers are in illuminated state when the handle controllers are exposed, and the plurality of cameras can simultaneously capture images of the light sources of the handle controllers.

The same technical concept as the tracking method of the head-mounted terminal device mentioned above, and embodiments of this application also provide a tracking apparatus of the head-mounted terminal device. The head-mounted terminal apparatus includes a head-mounted all-in-one machine and at least one external tracking device being wearable on a user body part, the head-mounted all-in-one machine and the external tracking device can communicate through at least two wireless communication manners, and the external tracking device includes an inertial measurement unit.

FIG. 6 illustrates a block diagram of the tracking apparatus of the head-mounted terminal device in an embodiment of this application, as shown in FIG. 6, the tracking apparatus 600 of the head-mounted terminal device includes:
a time synchronization unit 610 configured to, based on the wireless communication manner between the head-mounted all-in-one machine and the at least one external tracking device, control the head-mounted terminal device for time synchronization;
a user tracking unit 620 configured to, based on the inertial navigation data of the inertial measurement unit, determine posture data of the at least one external tracking device in a three-dimensional space, and perform user body part tracking based on the posture data.

In some embodiments, the tracking apparatus 600 of the head-mounted terminal device further includes: a judgment control unit;
the judgment control unit is configured to, when the head-mounted all-in-one machine communicates with the at least one external tracking device through a first wireless communication manner, control the head-mounted all-in-one machine to realize time synchronization with the at least one external tracking device; the first wireless communication manner is realized based on customized channel, and the customized channel does not support data retransmission during data transmission; when the head-mounted all-in-one machine communicates with a plurality of external tracking devices through a second wireless communication manner, controlling the plurality of external tracking devices to realize time synchronization, and the second wireless communication manner is realized based on classic channel.

In some embodiments, the judgment control unit includes a first control module and a second control module;
the first control module is configured to generate a hardware interrupt event and obtain time delay information of the head-mounted all-in-one machine corresponding to the hardware interrupt event; send the time delay information through the customized channel, so that the at least one external tracking device realizes time synchronization with the head-mounted all-in-one machine based on the time delay information and propagation time information, wherein the propagation time information includes propagation time of an electromagnetic wave between the head-mounted all-in-one machine and the external tracking device obtained in advance.

In some embodiments, the head-mounted all-in-one machine comprises a processor and a wireless communication apparatus; the first control module is also configured to, in response to the hardware interrupt event, obtain a processor time and a wireless communication apparatus time corresponding to the hardware interrupt event; obtain the time delay information of the wireless communication apparatus time relative to the processor time based on the processor time and the wireless communication apparatus time.

In some embodiments, the first control module is also configured to, before sending the time delay information through the customized channel, obtain a current time of the wireless communication apparatus, and generate timestamp information of the head-mounted all-in-one machine based on the current time and time delay information of the wireless communication apparatus; send the timestamp information through the customized channel.

In some embodiments, the second control module is configured to, send a master-slave setup command to the plurality of external tracking devices through the classic channel, so that an external tracking device determines a master device and a slave device devices based on the master-slave setup command, wherein the master device broadcasts a synchronization signal to each slave device, and the slave device receives the synchronization signal broadcasted by the master device, and the master device and the slave device realize time synchronization through the synchronization signal.

In some embodiments, the tracking apparatus 600 of the head-mounted terminal device further includes: a connection control unit;
the connection control unit is configured to, before controlling the head-mounted terminal device to perform time synchronization based on the wireless communication manner between the head-mounted all-in-one machine and the at least one external tracking device, control the head-mounted all-in-one machine to establish wireless connection with the at least one external tracking device through a corresponding wireless communication manner based on a wireless communication manner supported by the external tracking device.

In some embodiments, the time synchronization unit 610 is configured to, when the head-mounted terminal device being initiated, based on the wireless communication manner between the head-mounted all-in-one machine and the at least one external tracking device, control the head-mounted terminal device to perform time synchronization ; and/or, during data interaction of the head-mounted terminal device, the head-mounted all-in-one machine controls the head-mounted terminal device to perform time synchronization in accordance with a set frequency.

It can be understood that the tracking apparatus of the head-mounted terminal device can realize each step of the tracking method of the head-mounted terminal device provided in the aforementioned embodiments, relevant explanations on the tracking method of the head-mounted terminal device are applicable to the tracking apparatus of the head-mounted terminal device, and will not be repeated here.

It should be noted that:

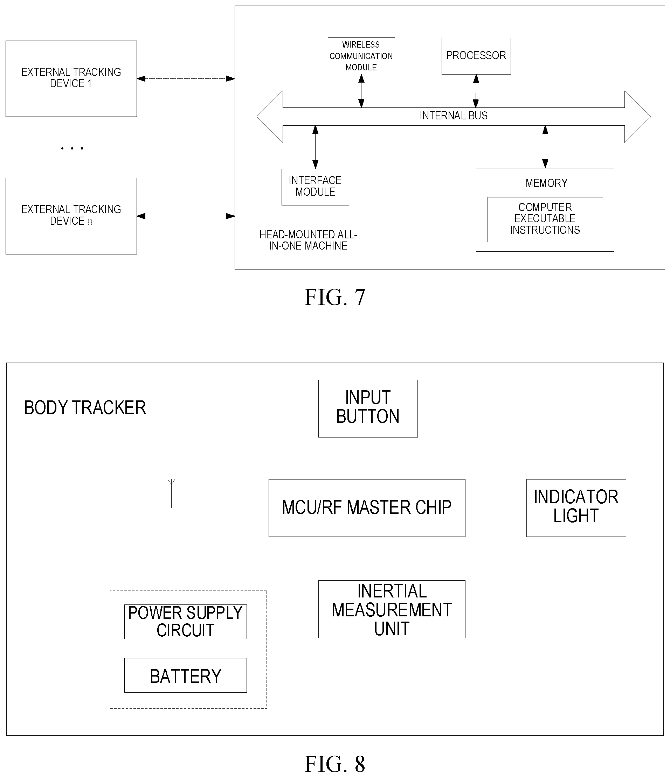

FIG. 7 illustrates a structural diagram of the head-mounted terminal device. Please refer to FIG. 7, on the hardware level, the head-mounted terminal device includes a head-mounted all-in-one machine and at least one external tracking device being wearable on a user body part. the head-mounted all-in-one machine and the external tracking device can communicate through at least two wireless communication manners, and the external tracking device includes an inertial measurement unit.

In some embodiments, the external tracking device includes a handle controller and/or a body tracker.

The handle controller is provided with a wireless communication module to connect with the head-mounted all-in-one machine through a corresponding wireless communication module. The handle controller further includes the inertial measurement unit and a plurality of illuminants, the handle controller can also include a power on/system key, a confirmation key, a return key, a menu key, a rocker confirmation key, a trigger key, a grab key, a rocker, etc. At the same time, the controller of the controller supports touch functions such as a confirm button, a return button, a remote sensing button, a trigger button, and also has a thumb rest area. The time synchronization control of the handle controller can refer to the above embodiments, and will not be repeated here.

The body tracker is provided with a wireless communication module to connect with the head-mounted all-in-one machine through a corresponding wireless communication module. As shown in FIG. 8, the body tracker includes an input button, such as a power button. At the same time, the body tracker further includes an indicator light, a battery, a power supply circuit, etc.

The head-mounted all-in-one machine includes a memory and a processor, and optionally further includes an interface module, a communication module, etc. The memory may include internal memory, such as a high-speed random access memory (RAM), or may also include a non-volatile memory, such as at least one disk storage. Of course, the head-mounted all-in-one machine may also include hardware required by other businesses.

The processor, the interface module, the communication module, and the memory may be connected to each other through an internal bus, which may be an ISA (Industry Standard Architecture) bus, a PCI (Peripheral Component Interconnect) bus, or an EISA (Extended Industry Standard Architecture) bus, etc. Buses can be divided into address buses, data buses, control buses, etc. For ease of representation, only one bidirectional arrow is used in FIG. 7, but it does not mean that there is only one bus or one type of bus.

The memory, configured to store computer executable instructions. The memory provides the computer executable instructions to the processor through the internal bus.

The processor that executes the computer executable instructions stored in the memory and is specifically configured to perform following operations:
based on the wireless communication manner between the head-mounted all-in-one machine and at least one external tracking device, controlling the head-mounted terminal device to perform time synchronization;
based on the inertial navigation data of the inertial measurement unit, determining posture data of the at least one external tracking device in a three-dimensional space, and performing user body part tracking based on the posture data.

The functions performed by the tracking method of the head-mounted terminal device disclosed in the embodiments shown in FIG. 1 of this application can be applied in the processor or implemented by the processor. The processor may be an integrated circuit chip with signal processing capabilities. In an implementation process, each step of the above method can be completed through an integrated logic circuit of hardware in the processor or software instructions.

Embodiments of this application also proposes a computer-readable storage medium, which stores one or more programs, the one or more programs, when executed by the processor, perform the aforementioned tracking method of the head-mounted terminal device.

Those skilled in the art should understand that embodiments of this application may be provided as a method, a system, or a computer program product. Therefore, this application may take a form of full hardware embodiments, full software embodiments, or embodiments combining software and hardware. Moreover, this application may take a form of a computer program product implemented on one or more computer available storage media (including but not limited to disk storage, CD-ROM, optical storage, etc.) containing computer available program code.

These computer program instructions may also be stored in computer-readable memory that can guide computers or other programmable data processing devices to work in a specific way, so that instructions stored in the computer-readable memory generate a manufacturing product including an instruction device that implements functions specified in one or more processes and/or blocks of a flowchart.

These computer program instructions may also be loaded onto computers or other programmable data processing devices, enabling a series of operational steps to be performed on the computer or other programmable devices to generate computer-implemented processing. The instructions executed on a computer or other programmable devices provide steps to implement the functions specified in one or more processes and/or blocks in a flowchart.

In a typical configuration, computing devices include one or more processors (CPUs), input/output interfaces, network interfaces, and a memory.

The memory may include non permanent memory, random access memory (RAM), and/or non-volatile memory in computer-readable media, such as read-only memory (ROM) or flash memory. Memory is an example of a computer-readable medium.

The computer-readable media, including permanent and non permanent, movable and non movable media, may be used for information storage by any method or technology. The information may be computer-readable instructions, data structures, program modules, or other data. In accordance with definition in this article, computer-readable media does not include temporary computer-readable media, such as modulated data signals and carriers.

It should also be noted that terms "including", "including", or any other variation thereof are intended to encompass non exclusive inclusion, such that a process, method, commodity, or device that includes a series of elements not only includes those elements, but also other elements that are not explicitly listed, or also include elements inherent to such a process, method, commodity, or equipment. Without further limitations, the elements limited by the statement "including one..." do not exclude the existence of other identical elements in the process, method, commodity, or device that includes the elements.

It should be understood that although various information may be described using terms such as first, second, and third in this application, such information should not be limited to these terms. These terms are only used to distinguish information of the same type from each other. For example, without departing from the scope of this application, a first information may also be referred to as a second information, and similarly, the second information may also be referred to as the first information.

The above is only the embodiments of this application and is not used to limit this application. For technical personnel in this field, there may be various modifications and variations in this application. Any modification, equivalent replacement, improvement, etc. made within spirit and principle of this application shall be included in scope of claim of this application.

## Claims

1. A tracking method of a head-mounted terminal device, **characterized in that**, the head-mounted terminal device comprises a head-mounted all-in-one machine and at least one external tracking device being wearable on a user body part, the head-mounted all-in-one machine and the external tracking device can communicate through at least two wireless communication manners, and the external tracking device comprises an inertial measurement unit; the method comprises:
based on a wireless communication manner between the head-mounted all-in-one machine and the at least one external tracking device, controlling the head-mounted terminal device to perform time synchronization;
based on inertial navigation data of the inertial measurement unit, determining posture data of the at least one external tracking device in a three-dimensional space, and performing user body part tracking based on the posture data.

2. The method of claim 1, **characterized in that**, based on the wireless communication manner between the head-mounted all-in-one machine and the at least one external tracking device, controlling the head-mounted terminal device to perform time synchronization, comprises:
when the head-mounted all-in-one machine communicates with the at least one external tracking device through a first wireless communication manner, controlling the head-mounted all-in-one machine to realize time synchronization with the at least one external tracking device; the first wireless communication manner is realized based on a customized channel, and the customized channel does not support data retransmission during data transmission;
when the head-mounted all-in-one machine communicates with a plurality of external tracking devices through a second wireless communication manner, controlling the plurality of external tracking devices to realize time synchronization, and the second wireless communication manner is realized based on a classic channel.

3. The method of claim 2, **characterized in that**, when the head-mounted all-in-one machine communicates with the at least one external tracking device through a first wireless communication manner, controlling the head-mounted all-in-one machine to realize time synchronization with the at least one external tracking device, comprises:
generating a hardware interrupt event and obtaining time delay information of the head-mounted all-in-one machine corresponding to the hardware interrupt event;
sending the time delay information through the customized channel, so that the at least one external tracking device realizes time synchronization with the head-mounted all-in-one machine based on the time delay information and propagation time information, wherein the propagation time information comprises propagation time of an electromagnetic wave between the head-mounted all-in-one machine and the external tracking device obtained in advance.

4. The method of claim 3, **characterized in that**, the head-mounted all-in-one machine comprises a processor and a wireless communication apparatus; generating a hardware interrupt event and obtaining time delay information of the head-mounted all-in-one machine corresponding to the hardware interrupt event, comprises:
in response to the hardware interrupt event, obtaining a processor time and a wireless communication apparatus time corresponding to the hardware interrupt event;
obtaining the time delay information of the wireless communication apparatus time relative to the processor time based on the processor time and the wireless communication apparatus time.

5. The method of claim 4, **characterized in that**, before sending the time delay information through the customized channel, the method further comprises:
obtaining a current time of the wireless communication apparatus, and generating timestamp information of the head-mounted all-in-one machine based on the current time and the time delay information of the wireless communication apparatus;
sending the time delay information through the customized channel, comprising:
sending the timestamp information through the customized channel.

6. The method of claim 2, **characterized in that**, when the head-mounted all-in-one machine communicates with a plurality of external tracking devices through a second wireless communication manner, controlling the plurality of external tracking devices to realize time synchronization, comprises:
sending a master-slave setup command to the plurality of external tracking devices through the classic channel, so that an external tracking device determines a master device and a slave device based on the master-slave setup command, wherein the master device broadcasts a synchronization signal to each slave device, and the slave device receives the synchronization signal broadcasted by the master device, and the master device and the slave device realize time synchronization through the synchronization signal.

7. The method of claim 1, **characterized in that**, before based on the wireless communication manner between the head-mounted all-in-one machine and the at least one external tracking device, controlling the head-mounted terminal device to perform time synchronization, the method further comprises:
controlling the head-mounted all-in-one machine to establish wireless connection with the at least one external tracking device through a corresponding wireless communication manner based on a wireless communication manner supported by an external tracking device.

8. The method of claim 1, **characterized in that**, based on the wireless communication manner between the head-mounted all-in-one machine and the at least one external tracking device, controlling the head-mounted terminal device to perform time synchronization, comprises:
when the head-mounted terminal device being initiated, based on the wireless communication manner between the head-mounted all-in-one machine and the at least one external tracking device, controlling the head-mounted terminal device to perform time synchronization;
and/or, during data interaction of the head-mounted terminal device, the head-mounted all-in-one machine controls the head-mounted terminal device to perform time synchronization in accordance with a set frequency.

9. A tracking apparatus of a head-mounted terminal device, **characterized in that**, the head-mounted terminal device comprises a head-mounted all-in-one machine and at least one external tracking device being wearable on a user body part, the head-mounted all-in-one machine and the external tracking device can communicate through at least two wireless communication manners, and the external tracking device comprises an inertial measurement unit, the apparatus comprises:
a time synchronization unit configured to, based on the wireless communication manner between the head-mounted all-in-one machine and the at least one external tracking device, control the head-mounted terminal device to perform time synchronization;
a user tracking unit configured to, based on inertial navigation data of the inertial measurement unit, determine posture data of the at least one external tracking device in a three-dimensional space, and perform user body part tracking based on the posture data.

10. A head-mounted terminal device, **characterized in that**, comprises: a head-mounted all-in-one machine and at least one external tracking device being wearable on a user body part, the head-mounted all-in-one machine and the external tracking device can communicate through at least two wireless communication manners, and the external tracking device comprises an inertial measurement unit;
wherein the head-mounted all-in-one machine comprises: a processor and a memory for storing computer executable instructions, the computer executable instructions, when executed by the processor, perform the tracking method of the head-mounted terminal device of any one of claims 1-8.
